# EUROPEAN PATENT SPECIFICATION

(11) **EP 2 974 777 B1**
(45) Date of publication and mention of the grant of the patent: **30.12.2020**
(21) Application number: 13877591.1
(22) Date of filing: 05.06.2013
(51) Int. Cl.: B01D 21/02, B01D 21/28, B01D 21/00

(54) **VIBRATING-TYPE, TILTED PLATE BOX SETTLING SEPARATOR**
ABSETZUNGSSEPARATOR MIT EINER VIBRIERENDEN, GENEIGTEN PLATTE
SÉPARATEUR PAR DÉCANTATION À BOÎTE À PLAQUES INCLINÉES DE TYPE VIBRANT

(30) Priority: 11.03.2013 CN 201310076262
(43) Date of publication of application: 20.01.2016
(73) Proprietor: Kunming University Of Science And Technology, Kunming, Yunnan 650093 (CN); Zhou, Xinglong, Kunming, Yunnan 650093 (CN)
(72) Inventor: ZHOU, Xinglong, Kunming Yunnan 650093 (CN)
(74) Representative: Kayahan, Senem
(86) International application number: PCT/CN2013/076807
(87) International publication number: WO 2014/139223

(56) References cited:
- WO-A1-2011/091722
- WO-A1-2011/151646
- CN-A- 1 254 619
- CN-A- 101 239 338
- CN-A- 101 239 338
- CN-U- 201 701 791
- CN-U- 202 460 209
- GB-A- 1 531 807
- US-A1- 2012 312 740

## Description

The invention involves a vibrating inclined plate box settlement separator, which is used for the liquid-solid separation, particularly applicable to high-efficiency settling concentration and separation of solid particles from liquid or water.

Solid-liquid separation does not only involve the separation of solid particles from liquid or water, but also the classification of solid particles and their separation from each another. Solid-liquid separation is extensively applied in different fields such as mineral processing, metallurgy, environmental protection, as well as chemical, coal, power industries etc. The solid-liquid separation has two main technologies, namely, concentration and filtration. Concentration has four types of major equipments: round pool thickeners, inclined-plate thickeners, inclined-tube thickeners, and high-efficiency thickeners.

The round pool thickeners exhibit defects such as vast land space, small capacity, poor efficiency, etc., which are limited in commercial practice and being gradually replaced by other devices.

High-efficiency thickeners can increase the capacity and improve thickening efficiency by adding the suitable amount of flocculants into ore pulps. However, with their relatively high operating cost, these thickeners also have application constraints.

By installing inclined plates or tubes in settling tanks, lamella thickeners and inclined-tube thickeners can enlarge settlement areas, reduce the required land areas, and increase capacities. Lamella thickeners include conventional open feed inclined plate thickeners, integrated inclined lamella thickening and classifying equipment (Chinese Patent, Publication No.: CN 1122578), and high-frequency vibrating multi-channel integrated lamella thickening and classifying equipment (Chinese Patent, Publication No.: CN 101239338). Lamella thickeners and inclined-tube thickeners have been applied in production widely by their small land area and large capacity. In particular, the vibrating high-frequency multi-channel integrated lamella thickening and classifying equipment is one of the most widely used sizing-thickening equipment because it had solved the technical problems of conventional lamella thickeners such as inclined plates caked with mud and blockage of the settlement channels.

Following patent/patent application documents show conventional inclined plate settlement separators:
D1 CN 202460209U (Jiangsu Hengye Machinery Co Ltd) 3 October 2012
D2 WO 2011/091722 A1 (Univ Kunming Science & Tech [CN]; Zhou Xinglong [CN]; Hu Wenyuan [CN]) 4 August, 2011.
D3 CN 201701791 U (Univ Kunming Science & Tech; Jiangsu Hengye Machinery Co Ltd) 12 January, 2011.
D4 WO 2011/151646 A1 (Siltbuster Ltd [GB]; Coulton Richard Henry [GB]) 8 December 2011.

We have found that the existing lamella thickeners also have several technical limitations in practice. These limitations include more parts required for the inclined plate assembly, unstable support of the inclined plate assembly, easily deformed of plate etc., which should be improved and enhanced.

The purpose for the invention of vibrating inclined plate box settlement separator is to solve the technical limitations of the conventional lamella equipment, increase the stability and reliability, and maintain long-term efficiency and stable operations of the equipment.

The vibrating inclined plate box settlement separator is built by applying the following technical characteristics. The separator consists of two parts, namely, the upper box (1) and the lower tapered hopper (2), which are connected securely to each other and sealed.

The upper box (1) is a rectangular or square steel-structured box with a supporting platform (1-1) on its left and right sides. The supporting platforms (1-1) have several spring assemblies (3), on which mounted several inclined plate box modules (4) that can vibrate separately. A feed box (5) is found on top of or inside the upper box (1). An overflow collect chute (6) is welded on the side of the box frame opposite to the feed box (5). The inclined plate box modules (4) and overflow collect chute (6) are connected with the rubber tube (7).

The lower tapered hopper (2) is either square, rectangular square, or square round; it is placed securely on the steel-structured bracket of the equipment or to the reinforced concrete framework (8). A smaller wear-resistant tapered hopper (9) is connected to the bottom of the first hopper (2).

In the inner wall of the small wear-resistant tapered hopper (9) can install a materials removal device (10). Meanwhile, an underflow forced discharge device (11) with a flow rate control valve (12) underneath can be connected to the bottom of the small wear-resistant tapered hopper (9).

The lower tapered hopper (2) is made of welded steel structures or reinforced concrete. The inside of the smaller hopper (9) is lined with wear-resistant rubber or coated with polyurethane. The hoppers (2 and 9) are connected by screws and bolts and sealed with wick or rubber mats.

The inclined plate box modules (4) have several inclined plate boxes (4-2) which are inserted into the parallelogram frames (4-1) at angles of 30° to 70° between the sloped side (4-1-1) of the parallelogram frame and ground level.

The inclined plate box (4-2) is rectangular, with a length equal to that of the sloped side (4-1-1) of the parallelogram frame (4-1). The top (4-2-1) and bottom (4-2-2) panels of the inclined plate box (4-2) consists of the titled settlement plate. More than two inner ribs (4-2-3) support the top (4-2-1) and bottom (4-2-2) panels of the inclined plate box along the width direction of the box (4-2). Consequently, each inclined plate box (4-2) forms several long and narrow independent settlement channels (4-2-5). A guide edge on the side wall (4-2-4) of each inclined plate box (4-2) prevents any displacement when assembling multiple inclined plate boxes.

The inclined plate boxes (4-2) are made of polycarbonate, polystyrene, polymethylmethacrylate, polythene, polypropylene, polyvinyl chloride, polyester fiber, acrylic butadiene styrene, and other parent materials, along with wear-resistant, antistatic, and hydrophobic additives. The boxes are extruded from the mold with prepared pellets.

The inclined plate boxes (4-2) are inserted one by one into the sloped side (4-1-1) of the parallelogram frame, and the lower parts of the boxes are supported by square steel, angle steel, or other profiles at the bottom of the frame. The bottom panel (4-2-2) of the second inclined plate box is firmly attached to the top panel (4-2-1) of the first inclined plate box. The two surfaces support each other. Furthermore, the inclined settlement plate is twice as thick as a single inclined plate box.

After more than 10 inclined plate boxes (4-2) are inserted into the parallelogram frame (4-1), a middle frame (4-3) made of shaped steel is loaded and compact the inclined plate boxes. Both sides of the middle frame are welded onto the two sides of the framework (4-1) to prevent any displacement of the inclined plate boxes (4-2) as well as to increase the strength and rigidity of the frame. The inclined plate boxes are then loaded by the same method described above. When the required settlement area is reached, the inclined plate boxes are compacted with another middle frame (4-3). The two sides of the middle frame (4-3) are welded onto the parallelogram frame (4-1) to form a settlement module.

The overflow chute side frame (4-4) is installed on the top part of the settlement module and with the same width as the parallelogram frame (4-1). The inside of the overflow chute side frame (4-4) has an inner overflow chute (4-5) which have adjustable height and tilt angle. In addition, an overflow discharge tube (4-6) is welded on one end of the overflow chute side frame (4-4).

The vibrator bracket (4-7) is welded at the center-of-gravity position of the settlement module and on the two sides of the frame. The bottom plate of the vibrator (4-8) is welded on the top of the vibrator bracket (4-7), and the vibrator (4-9) is fastened onto the bottom plate (4-8) with screws and bolts. The vibrator (4-9) may be mechanical, electromagnetic, or any other kind. The vibration frequency of vibrator is 800-3000 times/min and the power is 0.15-1.0 kW, which are determined by the vibration amplitude and settlement area of the modules. Thus, the entire vibrating inclined plate box module (4) is obtained.

The parallelogram frame (12) is welded with angle steel, U-steel, square steel, etc. The length (L) of the parallelogram frame (4-1) is 500-5000 mm or more, the height (H) is 500-2000 mm or more, and the width (B) is 300-1000 mm or more. The spring assemblies (3) may be compound springs made of rubber, steel, polyurethane, or any flexible material.

The vibrating inclined plate box modules (4) can be installed inside a box-type thickener or a central driving round pool-type thickener. As to box-type thickener, the vibrating inclined plate box modules (4) are arranged in parallel on the same horizontal plane. The settlement separator that consists of more than four vibrating inclined plate box modules (4) can be furnished with more than two lower tapered hoppers. As to round pool-type thickener, the vibrating inclined plate box modules (4) can be arranged in linear or radial form, with the necessary distance set aside for installing the overflow chute side frame (4-4) and the inner overflow chute (4-5) between two neighboring vibrating inclined plate box modules (4).

While in operation, the inclined plate box modules (4) adopt an intermittent vibration design. Vibration time and intermittence time can be adjusted via an external control cabinet. When the inclined plate box modules (4) are few, they can vibrate separately at different times; by contrast, when the inclined plate box modules (4) are numerous, they can vibrate in group at different times.

When the concentration of underflow is less than 50%, the materials removal device (10) on the inner wall of the small tapered hopper and the underflow forced discharge device (11) are unnecessary. The flow rate control valve (12) is directly installed onto the bottom of the small wear-resistant tapered hopper (9).

### Advantages of the Invention:

The vibrating inclined plate box settlement separator can exhibit the following positive effects:
1. The conventional inclined plate is replaced with a entirety inclined plate box, which eliminates the arduous processes of conventional inclined plate assembly involved such as fastening side plates, divide bars fixtures as well as bolting or screwing side plates to the steel frame of the inclined plate. That is, the proposed inclined plate box has a more efficient and convenient installation process.
2. The inner ribs of each inclined plate box securely connect and support the top and bottom panels of the inclined plates, which can prevents the inclined plate boxes do not happen the situation such as deformation, displacement, or loss of the inclined plates during installation and operation, but often occurred for the conventional inclined plates.
3. The inner ribs of the inclined plate boxes divide the settlement channel, which forms several narrow settlement channels along the width direction of the inclined plate boxes. Consequently, the settle hydraulic model of the solid particles is refined and separation efficiency is increased remarkable.
4. The top panel of an inclined plate box and the bottom panel of another inclined plate box make closely overlap, which doubles the thickness and increases the surface strength of the titled settlement plate. The plate box is not only do not deformed but its wear-out period and lifetime is more than doubled also.
5. Bolts and screws are not necessary when fixing the inclined plate boxes. As inclined plate boxes are securely linked, the vibration frequency and intensity can be increased, and vibration effects are significantly better than that of existing lamella thickeners. These features can guarantee that fine materials sliding smoothly along the surface of the settlement plates.
6. The materials removal device is integrated onto the inner wall of the small tapered hopper, as well as the underflow forced discharge device is connected to bottom of the tapered hopper, which enables the tapered hopper without stacked materials and equipment to discharge paste high-concentration underflow smoothly. The application field of the equipment can be expanded.
7. The vibrating inclined plate box modules (4) of the invention can be applied to the box-type thickener with a tapered hopper as well as to the round pool-type thickener with a driving frame, which solves the problem of large scale and height of equipment.

### Specification of Figures

Along with the embodiment shown, the structure of the proposed equipment is further explained. The protection scope of the invention, however, is not limited to the embodiment.

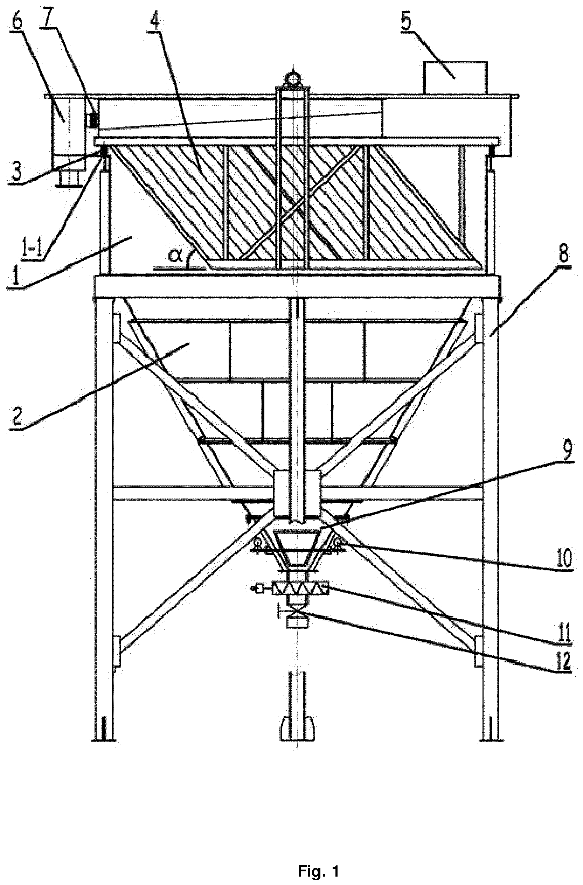

Fig. 1: Diagrammatic sketch of the settlement separator.

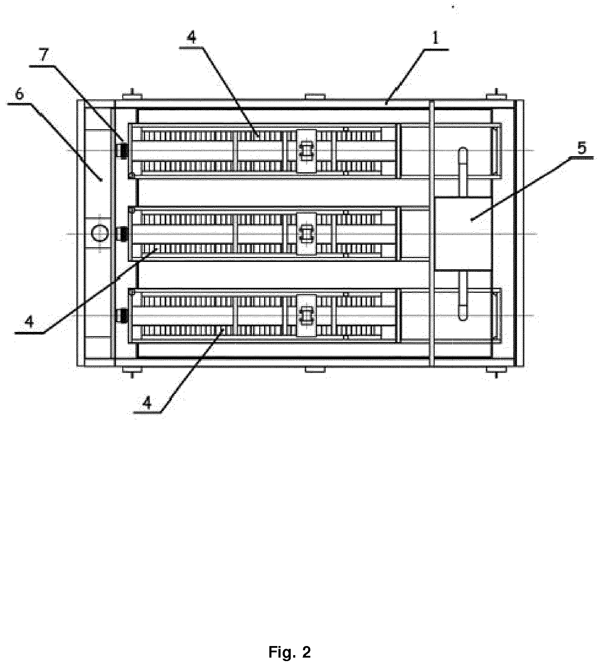

Fig. 2: Top view of the settlement separator.
Fig. 3: Three-dimensional view of the inclined plate box modules (4).
Fig. 4: Three-dimensional view the inclined plate box modules (4) opposite to Fig. 3.
Fig. 5: Diagrammatic sketch of a single inclined plate box (4-2).
Fig. 6: Diagrammatic sketch of two inclined plate boxes (4-2) superimposed on each other.

**Reference Numerals:** Each number or string of numbers corresponds to a part of the equipment.
1: upper box, 2: lower tapered hopper, 3: spring assemblies, 4: inclined plate box modules, 5: feed box, 6: overflow collect chute, 7: rubber connecting pipe, 8: supporting frame of the entire equipment, 9: small wear-resistant tapered hopper, 10: materials removal device on the inner wall of the tapered hopper, 11: underflow forced discharge device, 12: flow rate control valve
4-1: parallelogram frame, 4-1-1: sloped side of the parallelogram frame, 4-2: inclined plate box, 4-3: middle frame where the inclined plate boxes are fastened, 4-4: side frame of overflow chute, 4-5: inner overflow chute, 4-6: overflow discharge tube, 4-7: vibrator bracket, 4-8: bottom plate of the vibrator, 4-9: vibrator
4-2-1: top panel of the inclined plate box, 4-2-2: bottom panel of the inclined plate box, 4-2-3: inner ribs of the inclined plate box, 4-2-4: side wall of the inclined plate box, 4-2-5: settlement channels of the inclined plate box

### Implementation Details

The main structure of the invention consists of the upper box (1) and the lower tapered hopper (2). The upper box (1) is a rectangular or square welded steel structure. Both the left and right sides of the upper box have supporting platforms (1-1), on which several spring assemblies (3) are furnished. The spring assemblies (3) are made of rubber, steel, polyurethane, or other flexible materials. The inclined plate box modules (4), which can vibrate separately, are mounted on the spring assemblies. A feed box (5) is found on the top side of or inside the upper box (1). An overflow collect chute (6) is welded on the side opposite to the feed box (5). The overflow collect chute (6) is connected to inclined plate box modules (4) with flexible rubber pipes (7). The lower tapered hopper (2) is a square or rectangular square or a square round hopper, which is made of welded steel structural parts or reinforced concrete and is completely supported on a steel-structured bracket or reinforced concrete framework (8). The upper box and the lower tapered hopper are welded to each other and sealed. A smaller wear-resistant tapered hopper (9) is connected to the bottom of the lower tapered hopper (2). The inner wall of the smaller bracket is lined or coated with rubber, polyurethane, or other wear-resistant materials. When the underflow discharge concentration of the separator is more than 50%, the small tapered hopper is furnished with a material removal device (10) on its inner wall (Chinese Patent, Publication No.: CN 101816844). The two hoppers (2 and 9) are connected by flange with bolts and screws, and the middle between flanges is sealed with wick or rubber mats. The underflow forced discharge device (11) (Chinese Patent, Publication No.: CN 101559297) is connected to the bottom of the small tapered hopper by flange with bolts or screws, and the flow rate control valve (12) is connected to the bottom of the underflow forced discharge device (11). When the underflow discharge concentration of the separator is less than 50%, installing a materials removal device on the inner wall of the tapered hopper (10) and the underflow forced discharge device (11) are not necessary. The flow rate control valve (12) is then directly installed onto the bottom of the small wear-resistant tapered hopper (9).

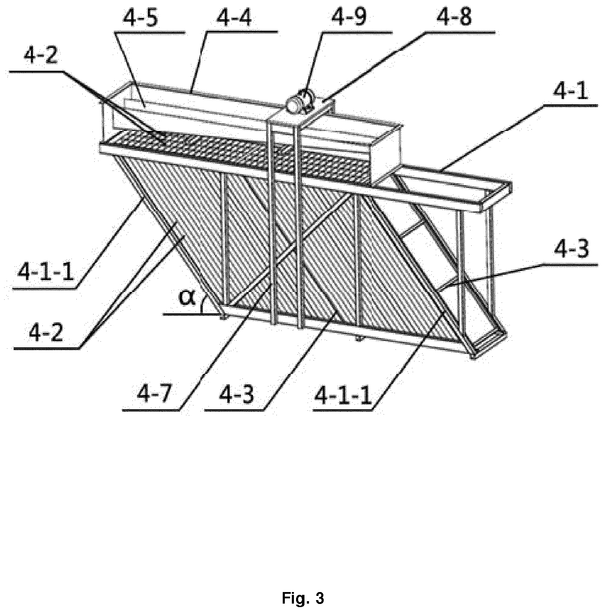

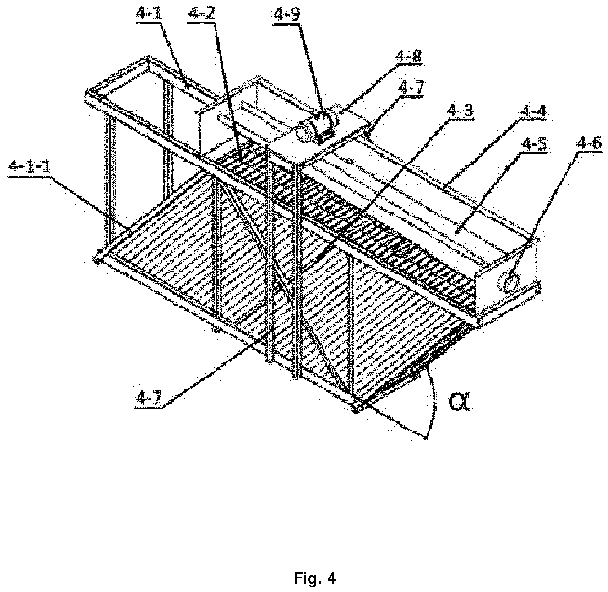

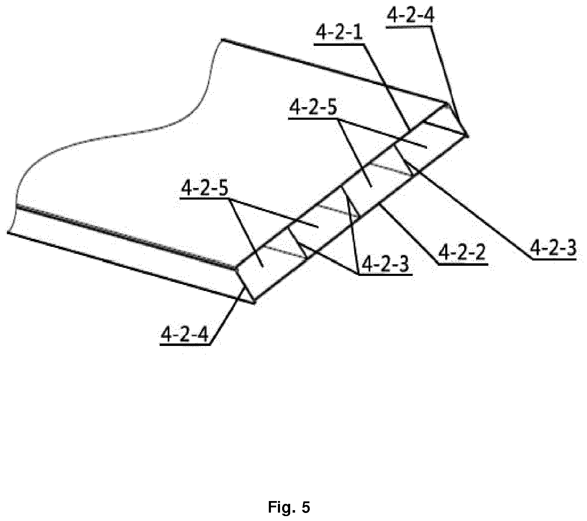

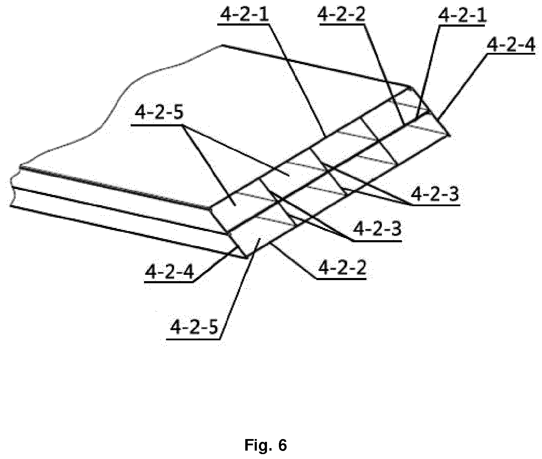

In Figs. 3, 4, 5 and 6, 4-1 designates the parallelogram frame on which the inclined plate boxes are installed and supported, 4-2 designates the inclined plate boxes, 4-3 designates the middle frame fastened to the inclined plate boxes, 4-4 designates the side frame of the overflow chute of the modules, 4-5 designates the inner overflow chute, 4-6 designates the overflow discharge tube, 4-7 designates the vibrator bracket, 4-8 designates the bottom plate of the vibrator, and 4-9 designates the vibrator. The parallelogram frame (4-1) is welded by angle steel, U-steel, square steel, or spliced by other light alloys or plastic steel. The angle (α) between the sloped side (4-1-1) of the parallelogram frame and ground level ranges from 30° to 70°. The length (L) of the parallelogram frame is 500-5000 mm or more, the height (H) is 500-2000 mm or above, and the width (B) is 300-1000 mm or more. The inclined plate box (4-2) is long rectangular box, which are made of polycarbonate, polystyrene, polymethylmethacrylate, polythene, polypropylene, polyvinyl chloride, polyester fiber, acrylic butadiene styrene, and other parent materials, along with wear-resistant, antistatic, and hydrophobic additives. The boxes are extruded from the molds by using prepared pellets. The length of each inclined plate box is the same as that of the sloped side of the parallelogram frame ranges from 500-3000 mm. The width of the box is the same as the inside width of the parallelogram frame, which is within 300-1000 mm and thickness of the box is between 20-100 mm. Both the top panel (4-2-1) and bottom (4-2-2) panel of each inclined plate box constitute the titled settlement plate. More than two inner ribs (4-2-3) connect and support the top and bottom panels of the plate boxes along the width direction and each inclined plate box (4-2) divided into several separate long and narrow settlement channels (4-2-5). The side wall (4-2-4) of the box has a guide edge for positioning during installation. The thickness of the plate box surface, i.e., those of the inner rib, the side wall and panels, ranges from 0.5 mm to 5mm. The inclined plate boxes (4-2) are inserted into the sloped side (4-1-1) of the parallelogram frame from top to bottom one by one, and the lower parts of the boxes are supported by square steel, angle steel, or other profiles at the bottom of the frame. The bottom panel (4-2-2) of the second inclined plate box is firmly attached to the top panel (4-2-1) of the first inclined plate box with the two surfaces supporting each other. Thus, the thick of the inclined settlement plate is twice as that if a single inclined plate box.

After more than 10 inclined plate boxes (4-2) are inserted into the parallelogram frame (4-1), the middle frame made of steel (4-3) is loaded and compact tightly on the packed inclined plate boxes. The two sides of the middle frame (4-3) are welded to the two sides of the parallelogram frame (4-1) to prevent any displacement of the inclined plate box as well as to increase the strength and rigidity of the parallelogram frame (4-1). Then, additional inclined plate boxes are mounted by following the aforementioned method. When the desired settlement area is achieved, the already packed inclined plate boxes are compacted tightly with another middle frame (4-3). The two sides of the middle frame (4-3) are welded to the parallelogram frame (4-1) to form a settlement module.

The overflow chute side frame (4-4) is installed on the top part of the settlement module and with the same width as the parallelogram frame (4-1). The inside of the overflow chute side frame (4-4) has an inner overflow chute (4-5) which have adjustable height and tilt angle. In addition, an overflow discharge tube (4-6) is welded on one end of the overflow chute side frame (4-4). The vibrator bracket (4-7) is welded at the center-of-gravity position of the settlement module and on the two sides of the frame. The bottom plate of the vibrator (4-8) is welded on the top of the vibrator bracket (4-7), and the vibrator (4-9) is fastened onto the bottom plate (4-8) with screws and bolts. The vibrator (4-9) may be mechanical, electromagnetic, or any other kind. The vibration frequency of vibrator is 800-3000 times/min and the power is 0.15-1.0 kW, which are determined by the vibration amplitude and settlement area of the modules. Thus, the entire vibrating inclined plate box module (4) is obtained.

The vibrating inclined plate box modules (4) of the invention can be installed inside a box-type thickener or a central driving round pool-type thickener. As to box-type thickener, the vibrating inclined plate box modules (4) are arranged in parallel on the same horizontal plane. The settlement separator that consists of more than four vibrating inclined plate box modules (4) can be furnished with more than two lower tapered hoppers. As to round pool-type thickener, the vibrating inclined plate box modules (4) can be arranged in linear or radial form, with the necessary distance set aside for installing the overflow chute side frame (4-4) and the inner overflow chute (4-5) between two neighboring vibrating inclined plate box modules (4).

While in operation, the inclined plate box modules (4) adopt an intermittent vibration design. Vibration time and intermittence time can be adjusted via an external control cabinet. When the inclined plate box modules (4) are few, they can vibrate separately at different times; by contrast, when the inclined plate box modules (4) are numerous, they can vibrate in group at different times.

**Embodiment 1:** An ilmenite concentrator, in which ore pulps needs to thick and deslimed before flotation. The size of desliming is limited to 19 µm. The feeding concentration of the ore pulp is 12%, the flow rate is 980m3/h, and the content of -200 meshes is 75%. The underflow concentration after enrichment should be 30% -35%, and the -19 µm content of overflow should be ≥ 92%. The design adopts a vibrating inclined plate box settlement separator with a total settlement area of 800 m².

The separator is a box-type structure with a welded steel upper box (1) and lower tapered hopper (2). Two parallel rows of 16 vibrating inclined plate box modules (4) are found inside the upper box. The settlement area of each inclined plate box module is 50 m². On the left and right supporting platforms (1-1) of the upper box (1), two groups of rubber spring assemblies (3) are furnished. A feeding box (5) is installed on the top of the upper box (1). On the left and right sides of the upper box (1), an overflow collect chute (6) is welded. The inclined plate box modules (4) are connected to the overflow collect chute (6) via the rubber connecting pipes (7). The lower tapered hopper is composed of four hoppers. The small wear-resistant tapered hopper (9) is connected to the bottom of each hopper. The inner wall of the small hopper (9) is coated with polyurethane for wear-resistant. The bottom of the small wear-resistant tapered hopper (9) is connected to a flow rate control valve (12). The entire equipment is supported by a steel-structured bracket (8).

Four vibrating inclined plate box modules (4) are installed horizontally inside the upper box (1), which correspond to each lower tapered hopper. The parallelogram frame (4-1) of the module is spliced and welded by steel structures. The included angle (α) between the frame and ground level is 50°. The length of the parallelogram frame is 5800 mm, the height is 1500 mm, and the width is 700 mm. The width of the inclined plate box (4-2) is 620 mm, the length is 1800 mm, and the thickness is 50 mm. There are four inner ribs (4-2-3) along with the width direction of the inclined plate box, which divide the inclined plate box into five long and narrow settlement channels (4-2-5) of the same size. The thickness of panels (4-2-1) and (4-2-2), the inner ribs (4-2-3), and the side wall (4-2-4) of the plate box are 3.0 mm. After the two sides of the inclined plate box tilt to 50°, which are inserted to the parallelogram frame (4-1) one by one. The bottom of the boxes is supported by square steel. After 24 inclined plate boxes are inserted, the middle frame (4-3) made of square steel is mounted and compact tightly to the inserted boxes. The two sides of the middle frame (4-3) are welded to the side frame of the parallelogram frame (4-1). While two more groups of inclined plate boxes with 24 boxes are inserted following the same method above, another middle frame (4-3) is mounted and compact tightly to the inserted boxes, the two sides of the middle frame are welded to the side frame of the parallelogram frame, a settlement module (4) is formed.

The side frame of the overflow chute (4-4) is installed on the upper part of the settlement module with the same width as the parallelogram frame (4-1). The inside of the side frame of the overflow chute (4-4) has an inner overflow chute (4-5), its height and tilt angle are adjustable. The overflow discharge tube (4-6) is welded to one end of the overflow chute (4-4). The vibrator bracket (4-7) is welded on the two sides at the center-of-gravity position of frame of the settlement module. The bottom plate of the vibrator (4-8) is welded on top of the bracket, and a mechanical vibrator (4-9) with the rated power of 0.55 kW is installed on the bottom plate with screws and bolts. The frequency of the vibrator is 2980 times/min.

Sixteen inclined plate box modules divide into four groups and intermittently vibrate by group, with vibration time lasting for 1 min and intermittence time lasting for 180 min. Both vibration time and intermittence time can be regulated via an external control cabinet as required.

The average concentration of underflow of the settlement separator reached to 33%, and -19 µm content of overflow ≥ 95% when the equipment put into use. The distortion of inclined plate boxes, as well as caking or blockage of settlement channel do not observed during the operation. The expected benefits are achieved.

**Embodiment 2:** A small iron ore concentrator, in which the concentrate needs to dewater and its water recovery to the concentrator for reuse. The ore pulp concentration of the concentrate is 15% with the flow rate is 120 m³/h. The underflow concentration after enrichment should be 65%, and the solid content of overflow should be ≤300mg/l, as well as the water recovery should be ≥70%.

The design adopts a vibrating inclined plate box settlement separator with a total settlement area of 400 m². The separator is a box-type structure with a welded steel upper box (1) and lower reinforced concrete tapered hopper. Two parallel rows of 10 vibrating inclined plate box modules (4) are found inside the upper box. The settlement area of each inclined plate box module is 40 m². On the left and right supporting platforms (1-1) of the upper box (1), two groups of rubber spring assemblies (3) are furnished. A feeding box (5) and overflow collect chute (6) is installed on the top and is welded to the left and right sides of the upper box (1). The inclined plate box modules (4) are connected to the overflow collect chute (6) via the rubber connecting pipes (7). A small wear-resistant tapered hopper inside wall lined with high density polyethylene (9) is connected to the bottom of the lower tapered hopper (2). A materials removal device (10) is installed to the inner wall of the small wear-resistant tapered hopper (9). Meanwhile, an underflow forced discharge device (11) with a flow rate control valve (12) underneath is connected to the bottom of the small wear-resistant tapered hopper (9). The entire equipment is supported by upright reinforced concrete columns (8).

The parallelogram frame (4-1) of the inclined plate box module is spliced and welded by steel structures. The included angle (α) between the frame and ground level is 45°. The length of the parallelogram frame is 3800 mm, the height is 1600 mm, and the width is 750 mm. The width of the inclined plate box (4-2) is 650 mm, the length is 2500 mm, and the thickness is 45 mm. There are five inner ribs (4-2-3) along with the width direction of the inclined plate box, which divide the inclined plate box into six long and narrow settlement channels (4-2-5) of the same size. The thickness of panels (4-2-1) and (4-2-2), the inner ribs (4-2-3), and the side wall (4-2-4) of the plate box are 2.0 mm. After the two sides of the inclined plate box tilt to 45°, which are inserted to the parallelogram frame (4-1) one by one. The bottom of the boxes is supported by angle steel. After 18 inclined plate boxes are inserted, the middle frame (4-3) made of square steel is mounted and compact tightly to the inserted boxes. The two sides of the middle frame (4-3) are welded to the side frame of the parallelogram frame (4-1). One more group of inclined plate boxes with 18 boxes are inserted following the same method above, another middle frame (4-3) is mounted and compact tightly to the inserted boxes, the two sides of the middle frame are welded to the side frame of the parallelogram frame; a settlement module (4) is formed.

The side frame of the overflow chute (4-4) is installed on the upper part of the settlement module with the same width as the parallelogram frame (4-1). The inside of the side frame of the overflow chute (4-4) has an inner overflow chute (4-5), its height and tilt angle are adjustable. The overflow discharge tube (4-6) is welded to one end of the overflow chute (4-4). The vibrator bracket (4-7) is welded on the two sides at the center-of-gravity position of frame of the settlement module. The bottom plate of the vibrator (4-8) is welded on top of the bracket, and a electricity-magnetic vibrator (4-9) with the rated power of 0.25 kW is installed on the bottom plate with screws and bolts. The frequency of the vibrator is 2680 times/min.

Ten inclined plate box modules divide into five groups and intermittently vibrate by group, with vibration time lasting for 2 min and intermittence time lasting for 240 min. Both vibration time and intermittence time can be regulated via an external control cabinet as required.

The underflow concentration of the settlement separator reached to ≥67%, and solid content of overflow ≤260 mg/l while the water recovery reached to ≥75% when the equipment put into use. The distortion of inclined plate boxes, as well as caking or blockage of settlement channel do not observed during the operation. The expected benefits are achieved.

**Embodiment 3:** A golden concentrator with the unite process of gravity- separation and floatation, in which the final tailings needs to thicken and filtration for drying discharge. The concentration of the tailings pulp is 15%, the flow rate is 650 m³/h, and the content of -200 meshes is 75%. The underflow concentration after enrichment should be ≥60% to meet the following filtration demand.

The design adopts a vibrating inclined plate box settlement separator with a total settlement area of 2000 m². The separator is a box-type structure with a welded steel upper box (1) and lower tapered hopper (2). Two parallel rows of 40 vibrating inclined plate box modules (4) are found inside the upper box. The settlement area of each inclined plate box module is 50 m². On the left and right supporting platforms (1-1) of the upper box (1), two groups of rubber spring assemblies (3) are furnished. A feeding box (5) and overflow collect chute (6) is installed on the top and is welded to the left and right sides of the upper box (1). The inclined plate box modules (4) are connected to the overflow collect chute (6) via the rubber connecting pipes (7). The lower tapered hopper is composed of eight hoppers. The small wear-resistant inside wall coated with polyurethane tapered hopper (9) is connected to the bottom of each hopper. A materials removal device (10) is installed to the inner wall of the small wear-resistant tapered hopper (9). Meanwhile, an underflow forced discharge device (11) with a flow rate control valve (12) underneath is connected to the bottom of the small wear-resistant tapered hopper (9). The entire equipment is supported by a steel-structured bracket (8).

Five vibrating inclined plate box modules (4) are installed horizontally inside the upper box (1), which correspond to each lower tapered hopper. The parallelogram frame (4-1) of the module is spliced and welded by steel structures. The included angle (α) between the frame and ground level is 55°. The length of the parallelogram frame is 6000 mm, the height is 1600 mm, and the width is 700 mm. The width of the inclined plate box (4-2) is 600 mm, the length is 2000 mm, and the thickness is 55 mm. There are four inner ribs (4-2-3) along with the width direction of the inclined plate box, which divide the inclined plate box into five long and narrow settlement channels (4-2-5) of the same size. The thickness of panels (4-2-1) and (4-2-2), the inner ribs (4-2-3), and the side wall (4-2-4) of the plate box are 2.5 mm. After the two sides of the inclined plate box tilt to 55°, which are inserted to the parallelogram frame (4-1) one by one. The bottom of the boxes is supported by square steel. After 25 inclined plate boxes are inserted, the middle frame (4-3) made of square steel is mounted and compact tightly to the inserted boxes. The two sides of the middle frame (4-3) are welded to the side frame of the parallelogram frame (4-1). While two more groups of inclined plate boxes with 25 boxes are inserted following the same method above, another middle frame (4-3) is mounted and compact tightly to the inserted boxes, the two sides of the middle frame are welded to the side frame of the parallelogram frame, a settlement module (4) is formed.

The side frame of the overflow chute (4-4) is installed on the upper part of the settlement module with the same width as the parallelogram frame (4-1). The inside of the side frame of the overflow chute (4-4) has an inner overflow chute (4-5), its height and tilt angle are adjustable. The overflow discharge tube (4-6) is welded to one end of the overflow chute (4-4). The vibrator bracket (4-7) is welded on the two sides at the center-of-gravity position of frame of the settlement module. The bottom plate of the vibrator (4-8) is welded on top of the bracket, and a mechanical vibrator (4-9) with the rated power of 0.55 kW is installed on the bottom plate with screws and bolts. The frequency of the vibrator is 2980 times/min.

Forty inclined plate box modules divide into ten groups and intermittently vibrate by group, with vibration time lasting for 3 min and intermittence time lasting for 180 min. Both vibration time and intermittence time can be regulated via two external control cabinets.

After the equipment put into use, the underflow concentration of the settlement separator reached to ≥65%, which provide the qualified feeding for the filtrator and meet the demand of tailings drying discharge. The distortion of inclined plate boxes, as well as caking or blockage of settlement channel do not observed during the operation. The good benefits are achieved.

**Embodiment 4:** An industrial waste water treatment plant needs to separate most part of solid particles before oxidation and creation by using settlement pool. The flow rate of feeding is 500 m³/h, and the content of solid particles is10g/l. The waste water is pretreated by using flocculant. The solid content of overflow should be ≤500mg/l after settlement. The design adopts a round-pool central driving thickener, and vibrating inclined plate box modules are installed in the pool with a total settlement area of 960 m².

The entirety structure of the thickener is the same as the conventional round-pool thickener. The body of the pool is reinforced concrete with the height of 3.5m. The central driving harrow frame can be lifted by hydraulic device. 16 vibrating inclined plate box modules (4) are installed onto the pool in radiation. The settlement area of each inclined plate box module is 60 m². The total settlement area is increase to 960 m² after the box modules are installed. The inclined plate box modules are made by the description of the invention. The parallelogram frame (4-1) of the module is spliced and welded by steel structures. The included angle (α) between the frame and ground level is 50°. The length of the parallelogram frame is 6500 mm, the height is 1600 mm, and the width is 700 mm. The width of the inclined plate box (4-2) is 600 mm, the length is 2000 mm, and the thickness is 50 mm. There are four inner ribs (4-2-3) along with the width direction of the inclined plate box, which divide the inclined plate box into five long and narrow settlement channels (4-2-5) of the same size. The thickness of panels (4-2-1) and (4-2-2), the inner ribs (4-2-3), and the side wall (4-2-4) of the plate box are 1.0 mm. After the two sides of the inclined plate box tilt to 50°, which are inserted to the parallelogram frame (4-1) one by one. The bottom of the boxes is supported by square steel. After 26 inclined plate boxes are inserted, the middle frame (4-3) made of square steel is mounted and compact tightly to the inserted boxes. The two sides of the middle frame (4-3) are welded to the side frame of the parallelogram frame (4-1). While two more groups of inclined plate boxes with 26 boxes are inserted following the same method above, another middle frame (4-3) is mounted and compact tightly to the inserted boxes, the two sides of the middle frame are welded to the side frame of the parallelogram frame, a settlement module (4) is formed. The side frame of the overflow chute (4-4) is installed on the upper part of the settlement module with the same width as the parallelogram frame (4-1). The inside of the side frame of the overflow chute (4-4) has an inner overflow chute (4-5), its height and tilt angle are adjustable. The overflow discharge tube (4-6) is welded to one end of the overflow chute (4-4). The vibrator bracket (4-7) is welded on the two sides at the center-of-gravity position of frame of the settlement module. The bottom plate of the vibrator (4-8) is welded on top of the bracket, and a mechanical vibrator (4-9) with the rated power of 0.25 kW is installed on the bottom plate with screws and bolts. The frequency of the vibrator is 2980 times/min. Sixteen inclined plate box modules divide into four groups and intermittently vibrate by group, with vibration time lasting for 1 min and intermittence time lasting for 180 min. Both vibration time and intermittence time can be regulated via an external control cabinet as required. After the equipment put into use, the solid content of overflow is down to ≤400 mg/l, and more than 96% solid particles are removed. The distortion of inclined plate boxes, as well as caking or blockage of settlement channel do not observed during the operation. The expected benefits are achieved.

## Claims

1. A vibrating inclined plate box settlement separator consisting of: an upper box (1) and a lower tapered hopper (2); wherein the upper box (1) and the lowered tapered hopper (2) are connected securely to each other and sealed; the upper box (1) is comprising a rectangular or square steel-structured box with supporting platforms (1-1) on its left and right sides; a plurality of spring assemblies (3) are located on the supporting platforms (1-1); a feed box (5) is located on a side of the top or inside the upper box (1); an overflow collect chute (6) is welded on a side of the box (1) opposite to the feed box (5); and a plurality of inclined box modules (4) mounted on the spring assemblies (3), wherein the inclined plate box modules and the overflow collect chute (6) are connected with a rubber tube (7); the lower tapered hopper (2) being either square, rectangular square, or square round-and being placed securely on the steel-structured bracket reinforced concrete framework (8) and comprising at its bottom a tapered hopper (9) lined with wear-resistant rubber or coated with polyurethane
**characterized in that** the inclined plate box modules (4) have a plurality of inclined plate boxes (4-2) inserted into a parallelogram frame (4-1) with angles ranged from 30° to 70° between the sloped side (4-1-1) of the parallelogram frame and ground level; wherein each inclined plate box (4-2) is a long rectangular box and its length is the same as that of the sloped side (4-1-1) of the parallelogram frame (4-1), wherein the inclined plate box comprises a top panel (4-2-1) and a bottom panel (4-2-2), both top and bottom panels consisting of tilted settlement plates, wherein at least two inner ribs (4-2-3) support the top panel (4-2-1) and the bottom panel (4-2-2) of the inclined plate box (4-2), so that each inclined plate box (4-2) has a plurality of long and narrow independent settlement channels (4-2-5); wherein a guide edge is located on each side wall (4-2-4) of each inclined plate box (4-2) and configured to prevent displacement when assembling multiple inclined plate boxes (4-2).

2. The vibrating inclined plate box settlement separator according to claim 1, **characterized in that** a material removal device (10) is located in an inner wall of the wear-resistant tapered hopper (9), wherein an underflow forced discharge device (11) with a flow control valve (12) is located underneath the material removal device and connected to an underside of the wear-resistant tapered hopper (9).

3. The vibrating inclined plate box settlement separator according to claim 1, **characterized in that** inclined plate boxes (4-2) are made of polycarbonate, polystyrene, polymethylmethacrylate, polythene, polypropylene, polyvinyl chloride, polyester fiber, acrylic butadiene styrene, and other parent materials, with wear-resisting, anti-static, and hydrophobic additives

4. The vibrating inclined plate box settlement separator according to claim 1, **characterized in that** the parallelogram frame (12) is welded with angle steel, U-steel or square steel, wherein a length (L) of the parallelogram frame (4-1) is 500-5000 mm, a height (H) of the parallelogram frame is 500-2000 mm and a width (B) is 300-1000mm, and the spring assemblies (3) arc compound springs made of rubber, steel, polyurethane, or other flexible materials, and the inclined plate box modules (4) are installed inside a box-type thickener or a central driving round pool thickener.

5. The vibrating inclined plate box settlement separator according to claim 1, **characterized in that** an overflow chute side frame (4-4) is installed on the top part of the settlement module and has the same width as the parallelogram frame (4-1), wherein the inside of the overflow chute side frame (4-4) has an inner overflow chute (4-5) which has an adjustable height and tilt angle, and an overflow discharge tube (4-6) is welded on one end of the overflow chute side frame (4-4).

6. The vibrating inclined plate box settlement separator according to claim 1, **characterized in that** a vibrator bracket (4-7) is welded at a center-of-gravity position of a settlement module and on the two sides of the frame, a bottom plate of a vibrator (4-8) is welded on a top of a vibrator bracket (4-7), and the vibrator (4-9) is fastened onto the bottom plate (4-8) with screws and bolts, wherein the vibrator (4-9) is mechanical or electromagnetic and the vibration frequency of the vibrator is 800-3000 times/min and a power is 0.15-1.0 kW, which are determined by a vibration amplitude and a settlement area of the modules.

7. A method of operating the vibrating inclined plate box settlement separator according to claim 1, **characterized in that** the inclined plate boxes (4-2) are inserted into the sloped side (4-1-1) of the parallelogram frame, and lower parts of the inclined plate boxes are supported by square tubes, steel angles, or other profiles at the bottom of the frame; wherein the bottom panel (4-2-2) of the second inclined plate box is firmly attached to the top panel (4-2-1) of the first inclined plate box and the two surfaces support each other, such that the inclined settlement plate is twice as thick as a single inclined box plate; and wherein after more than 10 inclined plate boxes (4-2) are inserted into the sloped side (4-1-1), a middle frame (4-3) made of shaped steel is loaded, the inclined plate boxes are compacted, and both sides of the middle frame are welded onto the two sides of the framework (4-1) to prevent any displacement of the inclined plate boxes (4-2) as well as to increase the strength and rigidity of the frame, the following inclined plate boxes being then loaded by the same method described above; and wherein when a predetermined settlement area is reached, the inclined plate boxes are compacted with a middle frame (4-3), the two sides of the middle frame (4-3) being welded onto the parallelogram frame (4-1) to form a complete inclined plate box settlement module.

## Patentansprüche

1. Ein vibrierender Schrägplattenkasten-Setzungsabscheider bestehend aus: einem oberen Kasten (1) und einem unteren konischen Trichter (2); wobei der obere Kasten (1) und der abgesenkte konische Trichter (2) sicher miteinander verbunden und abgedichtet sind; der obere Kasten (1) aus einem rechteckigen oder quadratischen Kasten mit Stahlstruktur besteht, der an seiner linken und rechten Seite Stützplattformen (1-1) aufweist; eine Mehrzahl von Federbaugruppen (3) auf den Trägerplattformen (1-1) angeordnet sind; ein Speisekasten (5) auf einer Seite der Oberseite oder im Inneren des oberen Kastens (1) angeordnet ist; ein Überlaufsammelschacht (6) an einer dem Speisekasten (5) gegenüberliegenden Seite des Kastens (1) angeschweißt ist; und eine Vielzahl von abgeschrägten Kastenmodulen (4) auf den Federpaketen (3) montiert sind, wobei die abgeschrägten Kastenmodule und der Überlaufsammelschacht (6) mit einem Gummischlauch (7) verbunden sind; wobei der untere konische Trichter (2) entweder quadratisch, rechteckig quadratisch oder quadratisch rund ist und sicher auf dem Stahlstrukturbügel-Stahlbetonrahmen (8) angeordnet ist und an seinem Boden einen konischen Trichter (9) aufweist, der mit verschleißfestem Gummi ausgekleidet oder mit Polyurethan beschichtet ist
**dadurch gekennzeichnet, dass** die abgeschrägten Kastenmodule (4) eine Vielzahl von abgeschrägten Plattenkasten (4-2) aufweisen, die in einen Parallelogrammrahmen (4-1) mit Winkeln im Bereich von 30° bis 70° zwischen der geneigten Seite (4-1-1) des Parallelogrammrahmens und dem Bodenniveau eingesetzt sind; wobei jeder Schrägplattenkasten (4-2) ein langer rechteckiger Kasten ist und seine Länge die gleiche ist wie die der geneigten Seite (4-1-1) des Parallelogrammrahmens (4-1), wobei der Schrägplattenkasten eine obere Platte (4-2-1) und eine untere Platte (4-2-2) umfasst, von denen sowohl die obere als auch die untere Platte aus geneigten Absetzplatten bestehen, wobei mindestens zwei innere Rippen (4-2-3) die obere Platte (4-2-1) und die untere Platte (4-2-2) des Schrägplattenkastens (4-2) stützen, so dass jeder Schrägplattenkasten (4-2) eine Vielzahl von langen und schmalen unabhängigen Setzungskanälen (4-2-5) aufweist; wobei eine Führungskante an jeder Seitenwand (4-2-4) jedes Schrägplattenkastens (4-2) angeordnet und so konfiguriert ist, dass sie eine Verschiebung verhindert, wenn mehrere Schrägplattenkästen (4-2) zusammengebaut werden.

2. Vibrierender Schrägplattenkasten-Setzungsseparator nach Anspruch 1, **dadurch gekennzeichnet, dass** eine Materialentfernungsvorrichtung (10) in einer Innenwand des verschleißfesten konischen Trichters (9) angeordnet ist, wobei eine Unterlauf-Zwangsentleerungsvorrichtung (11) mit einem Strömungssteuerventil (12) unterhalb der Materialentfernungsvorrichtung angeordnet und mit einer Unterseite des verschleißfesten konischen Trichters (9) verbunden ist.

3. Vibrierender Schrägplattenkasten-Setzungsseparator nach Anspruch 1, **dadurch gekennzeichnet, dass** Schrägplattenkästen (4-2) aus Polycarbonat, Polystyrol, Polymethylmethacrylat, Polyethylen, Polypropylen, Polyvinylchlorid, Polyesterfaser, Acrylbutadienstyrol und anderen Grundmaterialien mit verschleißfesten, antistatischen und hydrophoben Zusätzen hergestellt sind.

4. Vibrierender Schrägplattenkasten-Setzungsseparator nach Anspruch 1, **dadurch gekennzeichnet, dass** der Parallelogrammrahmen (12) mit Winkelstahl, U-Stahl oder Quadratstahl verschweißt ist, wobei eine Länge (L) des Parallelogrammrahmens (4-1) 500-5000 mm beträgt, eine Höhe (H) des Parallelogrammrahmens 500-2000 mm beträgt und eine Breite (B) 300-1000 mm beträgt, und die Federbaugruppen (3) sind Verbundfedern aus Gummi, Stahl, Polyurethan oder anderen flexiblen Materialien, und die abgeschrägten Kastenmodule (4) sind in einem kastenartigen Verdicker oder in einem zentralen treibenden Rundbeckenverdicker installiert.

5. Vibrierender Schrägplattenkasten-Setzungsabscheider nach Anspruch 1, **dadurch gekennzeichnet, dass** ein Überlaufrinnen-Seitenrahmen (4-4) auf dem oberen Teil des Setzungsmoduls installiert ist und die gleiche Breite wie der Parallelogrammrahmen (4-1) aufweist, wobei die Innenseite des Überlaufrinnen-Seitenrahmens (4-4) eine innere Überlaufrinne (4-5) aufweist, die eine einstellbare Höhe und einen einstellbaren Kippwinkel hat, und ein Überlaufabflussrohr (4-6) an einem Ende des Überlaufrinnen-Seitenrahmens (4-4) angeschweißt ist.

6. Vibrierender Schrägplattenkasten-Setzungsseparator nach Anspruch 1, **dadurch gekennzeichnet, dass** eine Vibratorhalterung (4-7) an einer Schwerpunktposition eines Setzungsmoduls geschweißt ist und an den beiden Seiten des Rahmens eine Bodenplatte eines Vibrators (4-8) auf eine Oberseite einer Vibratorhalterung (4-7) geschweißt ist, und der Vibrator (4-9) auf der Bodenplatte (4-8) mit Schrauben und Bolzen befestigt ist, wobei der Vibrator (4-9) mechanisch oder elektromagnetisch ist und die Vibrationsfrequenz des Vibrators 800-3000 mal/min und eine Leistung von 0.15-1.0 kW ist, die durch eine Vibrationsamplitude und eine Setzungsfläche der Module bestimmt werden.

7. Verfahren zum Betreiben des vibrierenden Schrägplattenkasten-Setzungsseparators nach Anspruch 1, **dadurch gekennzeichnet, dass** die Schrägplattenkästen (4-2) in die geneigte Seite (4-1-1) des Parallelogrammrahmens eingesetzt werden und untere Teile der Schrägplattenkästen durch Vierkantrohre, Stahlwinkel oder andere Profile am Boden des Rahmens abgestützt werden; wobei die Bodenplatte (4-2-2) des zweiten Schrägplattenkastens fest mit der oberen Platte (4-2-1) des ersten Schrägplattenkastens verbunden ist und die beiden Oberflächen sich gegenseitig stützen, so dass die abgeschrägte Absetzplatte doppelt so dick ist wie eine einzelne Schrägkastenplatte; und wobei nach dem Einsetzen von mehr als 10 Schrägplattenkästen (4-2) in die geneigte Seite (4-1-1) ein mittlerer Rahmen (4-3) aus geformtem Stahl geladen wird, die Schrägplattenkästen verdichtet werden und beide Seiten des mittleren Rahmens auf die beiden Seiten des Rahmens (4-1) geschweißt werden, um eine Verschiebung der Schrägplattenkästen (4-2) zu verhindern sowie die Festigkeit und Steifigkeit des Rahmens zu erhöhen, wobei die folgenden Schrägplattenkästen dann nach dem gleichen oben beschriebenen Verfahren geladen werden; und wobei, wenn ein vorbestimmter Setzungsbereich erreicht ist, die Schrägplattenkästen mit einem Mittelrahmen (4-3) verdichtet werden, wobei die beiden Seiten des Mittelrahmens (4-3) an den Parallelogrammrahmen (4-1) angeschweißt werden, um ein vollständiges Schrägplattenkasten-Setzungsmodul zu bilden.

## Revendications

1. Séparateur de tassement à boîte à plaque vibrante inclinée consistant en: une boîte supérieure (1) et une trémie conique inférieure (2) ; dans lequel la boîte supérieure (1) et la trémie conique inférieure (2) sont solidement reliées l'une à l'autre et scellées ; la boîte supérieure (1) comprenant une boîte rectangulaire ou carrée à structure en acier avec des plates-formes de support (1-1) sur ses côtés gauche et droit ; une pluralité d'ensembles de ressorts (3) sont situés sur les plates-formes de support (1-1) ; une boîte d'alimentation (5) est située sur un côté de la partie supérieure ou à l'intérieur de la boîte supérieure (1) ; une goulotte de collecte de débordement (6) est soudée sur un côté de la boîte (1) opposé à la boîte d'alimentation (5) ; et une pluralité de modules de boîte inclinée (4) montés sur les ensembles de ressorts (3), dans lequel les modules de boîte à plaque inclinée et la goulotte de collecte de débordement (6) sont reliés par un tube en caoutchouc (7) ; la trémie conique inférieure (2) étant soit carrée, soit rectangulaire, soit carrée ronde - et étant solidement placée sur la cadre en béton armé à support structuré en acier (8) et comprenant à sa base une trémie conique (9) bordée de caoutchouc résistant à l'usure ou revêtue de polyuréthane
**caractérisé en ce que** les modules de boîte à plaque inclinée (4) ont une pluralité de boîtes à plaques inclinées (4-2) insérées dans un cadre en parallélogramme (4-1) avec des angles allant de 30° à 70° entre le côté en pente (4-1-1) du cadre en parallélogramme et le niveau du sol ; dans lequel chaque boîte à plaque inclinée (4-2) est une longue boîte rectangulaire et sa longueur est la même que celle du côté en pente (4-1-1) du cadre en parallélogramme (4-1), dans lequel la boîte à plaque inclinée comprend un panneau supérieur (4-2-1) et un panneau inférieur (4-2-2), les deux panneaux supérieur et inférieur étant constitués de plaques de tassement basculées, dans laquelle au moins deux nervures intérieures (4-2-3) supportent le panneau supérieur (4-2-1) et le panneau inférieur (4-2-2) de la boîte à plaque inclinée (4-2), de sorte que chaque boîte à plaque inclinée (4-2) possède une pluralité de canaux de tassement indépendants longs et étroits (4-2-5) ; dans lequel un bord de guidage est situé sur chaque paroi latérale (4-2-4) de chaque boîte à plaque inclinée (4-2) et configuré pour empêcher le déplacement lors de l'assemblage de plusieurs boîtes à plaques inclinées (4-2).

2. Séparateur de tassement à boîte à plaque vibrante inclinée selon la revendication 1, **caractérisé en ce qu'**un dispositif d'enlèvement de matière (10) est situé dans une paroi intérieure de la trémie conique (9) résistant à l'usure, dans lequel un dispositif de décharge forcée de soupassement (11) avec une soupape de régulation de débit (12) est situé sous le dispositif d'enlèvement de matière et relié à une face inférieure de la trémie conique résistante à l'usure (9).

3. Séparateur de tassement à boîte à plaque vibrante inclinée selon la revendication 1, **caractérisé en ce que** les boîtes à plaques inclinées (4-2) sont faites de polycarbonate, de polystyrène, de polyméthacrylate de méthyle, de polyéthylène, de polypropylène, de chlorure de polyvinyle, de fibre de polyester, de butadiène-styrène acrylique et d'autres matériaux de base, avec des additifs résistants à l'usure, antistatiques et hydrophobes.

4. Séparateur de tassement à boîte à plaque vibrante inclinée selon la revendication 1, **caractérisé en ce que** le cadre en parallélogramme (12) est soudé avec de cornière en acier, de l'acier en U ou de l'acier carré, dans lequel une longueur (L) du cadre en parallélogramme (4-1) est de 500-5000 mm, une hauteur (H) du cadre en parallélogramme est de 500-2000 mm et une largeur (B) est de 300-1000 mm, et les ensembles de ressorts (3) sont des ressorts composites faits de caoutchouc, d'acier, de polyuréthane ou d'autres matériaux souples, et les modules de boîte à plaque inclinée (4) sont installés à l'intérieur d'un épaississeur de type boîte ou d'un épaississeur de piscine rond central.

5. Séparateur de tassement à boîte à plaque vibrante inclinée selon la revendication 1, **caractérisé en ce qu'**un cadre latéral de goulotte de débordement (4-4) est installé sur la partie supérieure du module de tassement et a la même largeur que le cadre en parallélogramme (4-1), dans lequel l'intérieur du cadre latéral de goulotte de débordement (4-4) a une goulotte de débordement intérieure (4-5) qui a une hauteur et un angle de basculement réglables, et un tube de décharge de débordement (4-6) est soudé sur une extrémité du cadre latéral de goulotte de débordement (4-4).

6. Séparateur de tassement à boîte à plaque vibrante inclinée selon la revendication 1, **caractérisé en ce qu'**un support de vibrateur (4-7) est soudé à une position du centre de gravité d'un module de tassement et sur les deux côtés du cadre, une plaque de fond d'un vibrateur (4-8) est soudée sur le dessus d'un support de vibrateur (4-7), et le vibrateur (4-9) est fixé sur la plaque de fond (4-8) à l'aide de vis et de boulons, dans lequel le vibrateur (4-9) est mécanique ou électromagnétique et la fréquence de vibration du vibrateur est de 800-3000 fois/min et une puissance de 0.15-1.0 kW, qui sont déterminés par une amplitude de vibration et une zone de tassement des modules.

7. Procédé de fonctionnement de séparateur de tassement à boîte à plaque vibrante inclinée selon la revendication 1, **caractérisé en ce que** les boîtes à plaques inclinées (4-2) sont insérées dans le côté en pente (4-1-1) du cadre en parallélogramme, et les parties inférieures des boîtes à plaques inclinées sont supportées par des tubes carrés, des cornières en acier ou d'autres profils au fond du cadre ; dans lequel le panneau inférieur (4-2-2) de la deuxième boîte à plaque inclinée est fermement fixé au panneau supérieur (4-2-1) de la première boîte à plaque inclinée et les deux surfaces se soutiennent mutuellement, de sorte que la plaque de tassement inclinée est deux fois plus épaisse qu'une seule boîte à plaque inclinée ; et dans lequel, après avoir inséré plus de 10 boîtes à plaques inclinées (4-2) dans le côté en pente (4-1-1), un cadre intermédiaire (4-3) fait d'acier profilé est chargé, les boîtes à plaques inclinées sont compactées, et les deux côtés du cadre intermédiaire sont soudés sur les deux côtés du cadre (4-1) pour empêcher tout déplacement des boîtes à plaques inclinées (4-2) ainsi que pour augmenter la résistance et la rigidité du cadre, les boîtes à plaques inclinées suivantes étant ensuite chargées selon le même procédé décrit ci-dessus dans lequel, lorsqu'une zone de tassement prédéterminée est atteinte, les boîtes à plaques inclinées sont compactées avec un cadre intermédiaire (4-3), les deux côtés du cadre intermédiaire (4-3) étant soudés sur le cadre en parallélogramme (4-1) pour former un module de tassement complet de la boîte à plaques inclinées.
